# EUROPÄISCHE PATENTSCHRIFT

(11) **EP 1 148 951 B1**
(45) Veröffentlichungstag und Bekanntmachung des Hinweises auf die Patenterteilung: **12.02.2003**
(21) Anmeldenummer: 99973628.3
(22) Anmeldetag: 25.08.1999
(51) Int. Cl.: B03D 1/14, B03D 3/00, B03B 5/28, B03B 11/00, D21F 1/70

(54) **TANGENTIALE FESTSTOFFABTRENNUNGS-VORRICHTUNG**
TANGENTIAL SEPARATING DEVICE FOR SOLID MATTER
DISPOSITIF DE SEPARATION TANGENTIELLE DE MATIERES SOLIDES

(30) Priorität: 20.01.1999 DE 19902148
(43) Veröffentlichungstag der Anmeldung: 31.10.2001
(73) Patentinhaber: Meri Entsorgungstechnik für die Papierindustrie GmbH, 80333 München (DE)
(72) Erfinder: NIEMCZYK, Bernhard, D-80796 München (DE); HEINZ, Robert, D-80335 München (DE); MENKE, Lucas, D-80335 München (DE); TROUBOUNIS, George, D-80331 München (DE)
(74) Vertreter: Rasch, Michael
(86) Internationale Anmeldenummer: DE9902707
(87) Internationale Veröffentlichungsnummer: WO00043127

(56) Entgegenhaltungen:
- EP-A- 0 555 784
- WO-A-95/23027
- DE-A- 2 850 269
- GB-A- 1 459 195
- GB-A- 2 079 618
- GB-A- 2 153 262

## Beschreibung

Die Erfindung betrifft eine Vorrichtung sowie ein Verfahren zur physikalischen Feststoffabtrennung aus Suspensionen mit dem Verfahren der Flotation in einem im wesentlichen zylindrischen Trennbecken. Derartige Vorrichtungen sind beispielsweise aus der EP-A-0 442 463 oder der WO 95/23027 bekannt.

Ausgehend von diesen vorbekannten Vorrichtungen bzw. Verfahren liegt der vorliegenden Erfindung die Aufgabe zugrunde, den Abscheidungsgrad bei der Feststoffabtrennung gattungsgemäßer Vorrichtungen und Verfahren weiter zu verbessern.

Erfindungsgemäß wird diese Aufgabe durch die im Patentanspruch 1 und 26 angegebenen Merkmale gelöst. Vorteilhafte Weiterbildungen ergeben sich aus den Unteransprüchen.

In dem zylindrischen Trennbecken ist zentrisch in der Mitte ein oben geschlossener rotationssymmetrischer Flockungsreaktor angeordnet der sich vorzugsweise nach unten im Durchmesser vergrößert.

In den Flockungsreaktor erfolgt nicht zentrisch der Suspensionseinlauf vorzugsweise über ein senkrechtes Einlaufrohr, wobei die nicht zentrische Einführung und das vorzugsweise einseitig offene Einströmrohr dazu führen, daß sich eine sanfte, abwärtsgerichtete sich verlangsamende Zirkulationsströmung bildet, die den für die Feststoffabscheidung durch Flotation nötigen Flokkenbildungsprozess entscheidend begünstigt. Am unteren Ende des rotationssymmetrischen Flockungsreaktors befindet sich eine am Umfang angeordnete Überströmkante die einen Ablauf der Suspension aus dem Flockungsreaktor erlaubt.

Die aus dem Flockungsreaktor ausströmende Flüssigkeit/Suspension strömt in am äußeren Umfang des Flockungsreaktors angeordnete Verteilerzellen, die geometrisch eine solche Form aufweisen, daß sich am Ende der Verteilerzellen eine tangential gerichtete Einströmung in das Trennbecken ergibt, also ein Einströmwinkel, der zusätzlich zur radial gerichteten Strömungskomponente auch eine tangentiale Strömungskomponente aufweist.

In dem Flockungs-/Strömungsreaktor kann ein Druckentspanungseinlaß angeordnet werden, in dem der Entspannungsdruck einer mit Gas übersättigten Flüssigkeit über einen ringförmigen Spalt abgebaut werden kann. Die durch Überschußgas entstehenden Blasen bilden einen Blasenteppich der radial vom Druckentspanungseinlaß in annähernd horizontaler Richtung nach auβen strömt, sich unter die sanfte, abwärtsgerichtete sich verlangsamende, im Flockungs- / Strömungsreaktor entstandene Zirkulations- Suspensionsströmung legt bzw. sich mit dieser mischt. Durch den einstellbaren Ringspalt des Druckentspanungseinlasses ist ein Betrieb bei verschiedenen Entspannungsdrücken möglich, was eine optimale Steuerung der Blasengrößen erlaubt, die von der absoluten Höhe des Entspannungsdrucks abhängig ist..

Die in der Zirkularströmung des Flockungs-/Strömungsreaktors entstandenen Feststoffflocken werden somit auf optimale Weise mit einem Blasenteppich unterlegt bzw. durchmischt und über die am äußeren Umfang des Flockungsreaktors angeordnete Verteilerzellen tangential in das Trennbecken eingeführt.

In einer bevorzugten Ausgestaltung sind die Verteilerzellen derart geformt, daß die Tangentialkomponente der Strömungsrichtung größer ist als die Radialkomponente. Noch bevorzugter beträgt das Verhältnis der Tangentialkomponente zur Radialkomponente 1 : 1 bis 50 : 1, besonders bevorzugt 2 : 1 bis 5 : 1.

In einer weiteren bevorzugten Ausgestaltung sind die Verteilerzellen derart geformt, daß das Komponentenverhältnis der Tangentialkomponente zur Radialkomponente der Suspensions-Strömungsgeschwindigkeit am Vertreilerzelleneinlaß zwischen 0,3:1 und 1:1, vorzugsweise 0,8:1 bis 1:1 beträgt.

Um Flotation erfolgreicher als chemisch-physikalisches Trennverfahren einzusetzen ist einen optimale Bildung von Feststoffflocken/ Feststoffverbänden eine wesentlichen Voraussetzung Zur Erzielung guter Abscheide-Ergebnisse, wobei der Einsatz von chemischen Flockungshilfsmitteln (z.B. Polymeren) heute Stand der Technik ist, die Kosten dieser Flockungshilfsmittel jedoch einen erheblichen Betriebskostenfaktor darstellen.

Der Einsatz von Flockungshilfsmitteln bzw. die Feststofflockenbildung kann erheblich dadurch optimiert werden, daß die Flokkenbildung selbst in einem eigene Reaktionsraum bei definierten, nicht turbulenten Strömungsverhältnissen unter Einhaltung bestimmter auch kleinster Reaktionszeiten stattfindet. Bei dem bisherigen Stand der Technik wurde dies nicht berücksichtigt.

Die vorliegende Erfindung erfüllt mit dem Flockungs-/Strömungsreaktor, in dem durch die nicht zentrische Einströmung eine sanfte abwärtsgerichtete Zirkulationsströmung entsteht, diese Anforderungen für eine verbesserte Flockung optimal und erlaubt den reduzierten Einsatz von Flockungshilfsmitteln.

Bei dem bisherigen Stand der Technik erfolgt die Einmischung der durch Übersättigung erzeugten Blasen meist in Rohrleitungen oder engen Strömungsräumen bei hohen Strömungsgeschwindigkeiten von ca. 1,6 bis 3 m/s, zudem sind die Wege von der Blasenentstehung bis zur Einmischung und zum Beginn der effektiven Flotation lang (3 bis 10 m). Beide Faktoren bringen Nachteile mit sich; hohe Strömungsgeschwindigkeiten und lange Wege zerstören gebildete Flocken oder be-/verhindern Flockbildung, durch Übersättigung erzeugte kleinste Bläschen koaleszieren zu größeren Blasen, die bei der Flotation weniger effektiv sind.

Bei der vorliegenden Erfindung werden demgegenüber die Blasen im Flockungs-/Strömungsreaktor bei reduzierter Geschwindigkeit sanft ohne Beeinträchtigung der Flocken eingemischt, kurze Wege von vorzugsweise 0,5 bis 1 m bis zum Trennbehälter, in dem die Flotation abläuft, verhindern Koaleszenz der Blasen und erlauben verbesserte Flotation mit kleinsten Bläschen.

Ein weiterer Vorteil der Erfindung besteht darin, daß die herkömmlicherweise rein radial nach außen gerichtete Gemischströmung aus Suspension und Luftbläschen aufgrund der tangentialen Strömungskomponente eine längere Wegstrecke zu den Auslaßöffnungen im Bereich der Beckenwandung zurücklegen muß als bei herkömmlichen Trennverfahren mit rein radialer Strömung, so daß aufgrund der längeren Wegstrecke bzw. der längeren Verweildauer im Trennbecken, die Feststoffabtrennung wirksamer durchgeführt wird. Darüber hinaus ist die Wegströmung auch beruhigter, was ebenfalls zu einer verbesserten Abtrennung führt. Die erfindungsgemäße Vorrichtung kann somit gegenüber vorbekannten Ausführungen kompakter ausgeführt werden.

Eine bevorzugte Weiterbildung der Erfindung sieht vor, daß der Druckentspannungseinlaß einen axial verschiebbaren, vorzugsweise konischen Einstellkolben umfaßt, durch dessen axiale Verstellung ein mehr oder wenig enger Ringspalt gebildet ist, durch den die mit gelöstem Gas versetzte Flüssigkeit unter plötzlichem Druckabfall hindurchtritt. Durch die Einstellung des Spaltes kann der Druckabfall abhängig vom gewünschten Strömungsdurchsatz so eingestellt werden, daß sich eine geeignete Bläschengröße ergibt, die am zweckmäßigsten zwischen 10 µm und 1500 µm liegt.

Eine vorteilhafte Weiterbildung der Erfindung sieht vor, daß oberhalb des Druckentspannungseinlasses Ablenkeinrichtungen vorgesehen sind, welche dazu dienen, den Strom der blasenversetzten Flüssigkeit in horizontal-radialer Richtung zu bündeln, damit sich eine Zweischichtströmung ausbildet, wobei am Wannenboden die blasenversetzte Flüssigkeit und darüber die Suspensionsströmung verläuft.

Sobald die von Feststoffen befreite Flüssigkeit den Bereich der Außenwand des Trennbeckens erreicht, wird diese über besonders ausgebildete Auslaßöffnungen aus dem Trennbecken entfernt und über Sammelleitungen einem Flüssigkeitsauslaß zugeführt. Vorzugsweise sind die Auslaßöffnungen schlitzförmig ausgeführt, wobei sich diese Schlitze über dem gesamten. Umfang der Beckenwand oberhalb des Bodens befinden. Gruppenweise sind diese Auslaßöffnungen durch geeignete Rinnen oder Leitungen zusammengeführt und kommunizieren mit einer Anzahl (vorzugsweise 4) entlang des Bekkenumfangs verteilter Auslässe.

Eine alternativ oder auch zusätzlich vorzusehende Anordnung zur Ableitung der geklärten Flüssigkeit besteht darin, daß an der Außenwand des Trennbeckens mindestens ein umlaufendes Ableitungsrohr oberhalb des Beckenbodens angeordnet ist, das mit einer Vielzahl von Durchlaßöffnungen versehen ist. Vorzugsweise sind diese Durchlaßöffnungen im unteren Bereich des Ableitungsrohrs angeordnet, so daß die Einströmung in das Ableitungsrohr von unten her erfolgt, um ein Verstopfen der Öffnungen durch herabsinkende Stoffe wirksam zu verhindern. Dieses Ableitungsrohr kommuniziert über eine Verbindungsleitung mit einem Auslaß. Alternativ ist es auch möglich, dieses Ableitungsrohr in mehrere, vorzugsweise 3 - 4 Ableitungsrohrabschnitte aufzuteilen, die zusammen einen kompletten Ring ergeben und jeweils mit eigenen Auslässen kommunizieren. Technisch besonders einfach lassen sich die Ableitungsrohre realisieren, wenn diese aus miteinander verbundenen geraden Rohrstöcken bestehen und auf diese Weise eine Art polygonartiges Ableitungsrohr bilden.

Oberhalb des Trennbeckens ist gemäß einer weiteren vorteilhaften Ausbildung der Erfindung eine rotierende Schlamm-Räumvorrichtung vorgesehen, die vorzugsweise mindestens zwei Schlammpaddel umfaßt, welche sich sowohl um die eigene gemeinsame, leicht gegenüber der Horizontalen geneigten Drehachse, als auch um die vertikale Achse des Trennbeckens drehen.

Eine besonders bevorzugte Weiterbildung der Erfindung sieht vor, daß die Drehrichtung der Schlamm-Räumvorrichtung entgegengesetzt zur tangentialen Komponente der Suspensionsströmung verläuft, wodurch die Relativgeschwindigkeit zwischen den Schlammpaddeln und der Schlammströmung im oberen Bereich des gefüllten Beckens erhöht wird, was zu einem besseren und effektiveren Austrag insbesondere von in der Suspension enthaltenen festen Fasern führt.

Eine besonders wirksame Entfernung des Schlammes läßt sich mittels einer erfindungsgemäßen Weiterbildung erreichen, bei der mehrere am Umfang einer umlaufenden Welle verteilte Schöpfeinrichtungen vorgesehen sind, die den Schlamm in eine parallel zur Welle verlaufende Ableitrinne fördern, wobei jede Schöpfeinrichtung aus einem bügelartigen Messer sowie einem Schlammpaddel besteht. Mittels des vorzugsweise rechteckig ausgebildeten Bügelmessers wird in den Schlamm hineingeschnitten und damit das Abräumen des abgelösten Schlammes durch das nachfolgende Schlammpaddel erleichtert. Diese Weiterbildung hat besondere Vorteile bei stark verdichtetem, verkrusteten oder sonstwie verhärteten Schlammbildungen.

Der Boden des Trennbeckens kann in einer einfachen Ausführung plan ausgebildet sein. Eine bevorzugte alternative Ausbildung der Erfindung sieht vor, daß der Boden ring-rinnenartig ausgebildet ist und mindestens eine Sediment-Ablauföffnung umfaßt, wodurch sich beim Trennvorgang absetzende Schwerteile wirksam entfernen lassen.

Die erwähnten Ausführungsformen der Erfindung bewirken eine Trennung der Suspension auf dem Flotationsprinzip. Alternativ ist es genauso möglich, eine Trennung auf dem Senimentationsprinzip durchzuführen, wobei insbesondere dann die Einleitung einer mit Gas versetzten Flüssigkeit entfällt, also lediglich ein Suspensionseinlaß zur Einleitung der von Feststoffen zu befreienden Suspension vorgesehen ist, wobei diese Suspension in gleicher Weise wie bei den oben beschriebenen Ausführungsformen durch die exzentrische Anordnung des Suspensionseinlasses mit einer tangentialen Geschwindigkeitskomponente durch das Trennbecken geführt werden kann.

Die Erfindung wird nachfolgend anhand der beigefügten Zeichnungen weiter erläutert. Dabei zeigt:
- Figur 1:: einen schematischen vertikalen Querschnitt durch eine erfindungsgemäße Feststoffabtrenn-Vorrichtung;
- Figur 2:: eine schematische Draufsicht auf die Vorrichtung gemäß Figur 1;
- Figur 3:: eine Darstellung des Mittelbereichs einer Feststoffabtrenn-Vorrichtung ähnlich der von Figur 1, im Querschnitt;
- Figur 4:: eine schematische Draufsicht der Anordnung von Figur 3;
- Figur 5:: eine bevorzugte Ausführungsform einer Flüssigkeitsablaufeinrichtung in Draufsicht;
- Figur 6:: eine perspektivische Detailansicht der Ausführung von Figur 5;
- Figur 7:: eine schematische Detailansicht einer alternativen Flüssigkeitsableitvorrichtung;
- Figur 8:: eine schematische Draufsicht auf eine SchlammRäumvorrichtung bei einer erfindungsgemäßen Feststoffabtrenn-Vorrichtung;
- Figur 9:: eine schematische Seitenansicht der SchlammRäumvorrichtung von Figur 8;
- Figur 10:: vier schematische Darstellungen zur Funktionsweise einer Ausführung einer Schlamm-Räumvorrichtung, und
- Figur 11:: drei Ansichten einer alternativen Ausführung einer Schlamm-Räumvorrichtung.

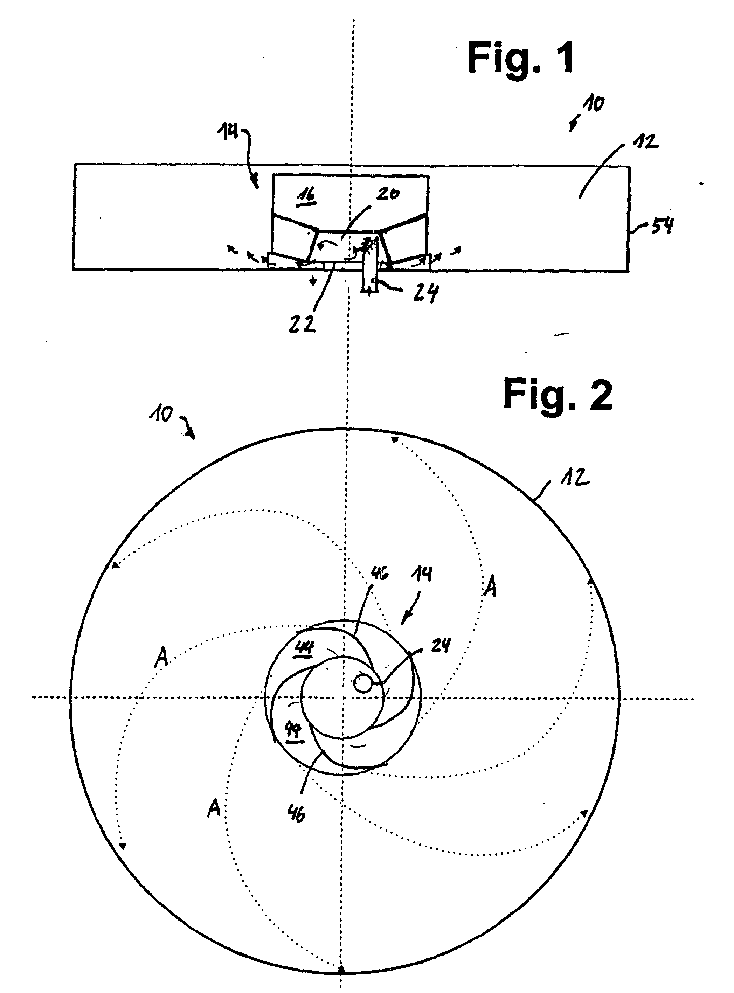

Die Erfindung wird nunmehr unter Bezugnahme auf die Figuren 1 und 2 bzw. 3 und 4 näher erläutert. Gleich Bezugszeichen in den verschiedenen Darstellungen kennzeichnen gleiche Teile.

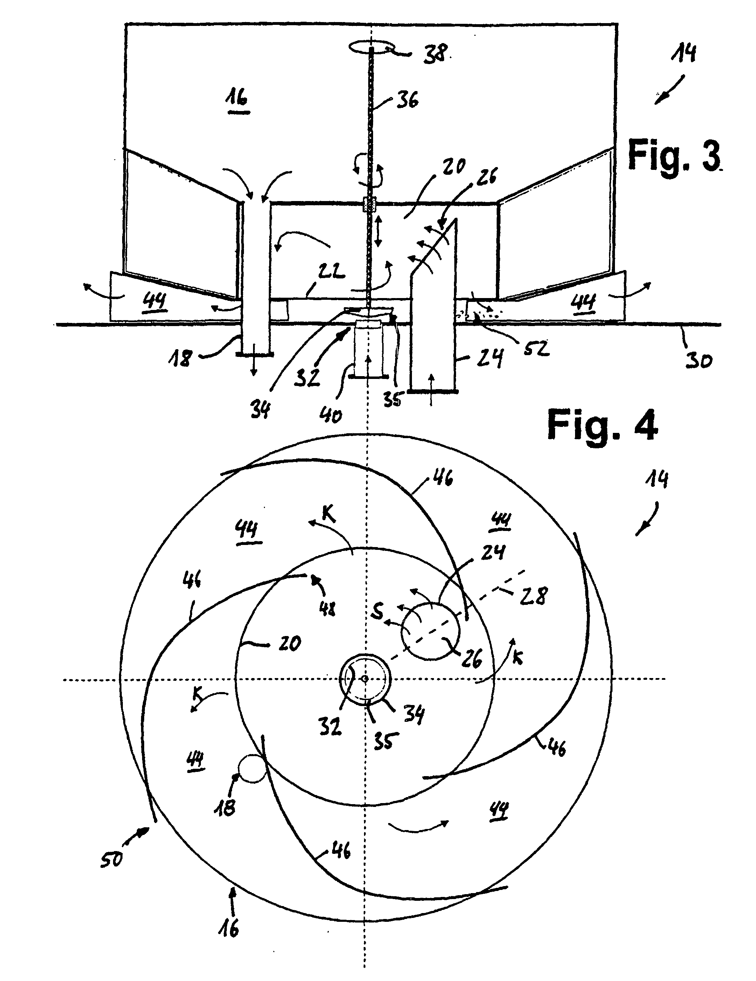

Die in den Figuren 1 und 2 dargestellte erfindungsgemäße Abtrenn-Vorrichtung **10** besteht im westlichen aus einem zylindrischen Trennbecken **12**, in dessen axialem Mittelbereich eine Zentralbaugruppe **14** angeordnet ist. Diese Zentralbaugruppe **14** umfaßt eine oben offene Flotat-Sammelwanne **16,** die mit einer Flotat-Abführleitung **18** verbundenist unterhalb der Flotat-Sammelwanne **16** ist ein rotationssymmetrischer Flockungsreaktor **20** angeordnet, der oben und seitlich geschlossen ist und lediglich im unteren Bereich horizontale Öffnungen bzw. eine radiale Umfangsöffnung unterhalb einer Umlaufkante **22** aufweist. Der Flockungsreaktor **20** ist in der in Figur 1 dargestellten Ausführung kegelstumpfartig und in der in Fig. 3 gezeigten Ausführung zylindrisch ausgebildet.

In den oberen Bereich des Innenraums des Flockungsreaktors **20** mündet ein Suspensionseinlaß **24**, dessen Öffnung **26** schräg ausgeführt ist, wobei der Neigungswinkel senkrecht zu der in Figur 4 dargestellten Kipplinie **28** verläuft.

In der in den Figuren 3 und 4 gezeigten Ausführung ist im Bodenbereich **30** des Flockungsreaktors **20** ein Druckentspannungseinlaß **32** vorgesehen, dessen Einlaßspalt durch einen konischen Einstellkolben **34** eingestellt werden kann. Dieser Einstellkolben **34** wird in der gezeigten Ausführung über eine Einstellstange **36** und ein Handrad **38** eingestellt. Natürlich ist es alternativ auch möglich, den Einstellkolben **34** motorisch zu verstellen.

Der Einstellkolben **34** weist in der dargestellten Ausführung einen erheblich größeren Durchmesser auf als der Druckentspannungseinlaß **32**, er bildet hierdurch einen Ablenkrand **35**, der den Zweck hat, die über den Druckentspannungseinlaß **32** éinströmende blasenbehaftete Flüssigkeit in horizontal-radiale Richtung umzulenken und eine zu frühzeitige Vermischung mit der von oben kommenden Suspensionsströmung zu verhindern. Alternativ kann der Einstellkolben **34** auch mit geringerem Durchmesser gefertigt werden und ein fest montiertes tellerartiges Ablenkblech oberhalb des Einstellkolbens **34** vorgesehen werden.

Der Druckentspannungseinlaß **32** wird von einer Flüssigkeitsleitung **40** gespeist, über die eine mit gelöstem Gas versetzte Flüssigkeit zugeführt wird. Radial außerhalb des Umfangsrandes **22** erstrecken sich eine Anzahl nebeneinander befindlicher Verteillerzellen **44** mit vorzugsweise jeweils rechteckigem Strömungsquerschnitt, der sich vom Flockungsreaktors **20** nach radial außen in Umfangsrichtung und Vertikalrichtung verbreitet.

Die Verteilerzellen **44** bilden einen sich in Umfangsrichtung zunehmend krümmenden Kanal und sind über Trennwände **46** voneinander abgetrennt. Die Anzahl und Krümmung der Verteilerzellen **44** ist so gewählt, daß sich ein gewünschter Strömungsaustrittswinkel des Suspensions-Bläschen-Gemisches ergibt, der eine signifikante Tangentialkomponente umfaßt, also nicht rein radial verläuft. Es sei nochmals ausdrücklich betont, daß die kegelstumpfartige Ausbildung des Flockungsreaktors **20**, wie in Figur 1 dargestellt, oder die in den Ansprüchen erwähnte glockenartige Ausbildung auch bei der Ausführung gemäß Figuren 3 und 4 mit Druckentspannungseinlaß **32** zur Anwendung kommen kann.

Die Funktion der erfindungsgemäßen Vorrichtung gemäß der Figuren 1 und 2 ist folgendermaßen:

Über den Suspensionseinlaß **24** wird eine mit Feststoffen (beispielsweise kleine Schwerteile, Faserstoffen und anderen Bestandteilen) versetzte Suspension zugeführt, die aufgrund der schräg gestellten Austrittsöffnung **26** des Suspensionseinlasses **24** in tangentialer Richtung (wie in Figur 4 durch die Pfeile S angedeutet) in dem Reaktorinnenraum eintritt und spiralartig im Flockungsreaktor **20** nach unten wandert. Die Suspension kann dann nach Passieren des Umfangsrandes **22** nach radial außen strömen in die Verteilerzellen **44** einströmen, wobei die bereits vorhandene Drehbewegung (Geschwindigkeitskomponente in tangentialer Richtung) durch die Verteilerzellen **44** verstärkt wird. Wie insbesondere in den Figuren 1 und 2 zu erkennen ist, strömt anschließend das die Zentralbaugruppe **14** verlassende Gemisch unter einem definierten. Winkel zur Radialrichtung nach außen, was in Figur 2 durch die Pfeile A angedeutet ist.

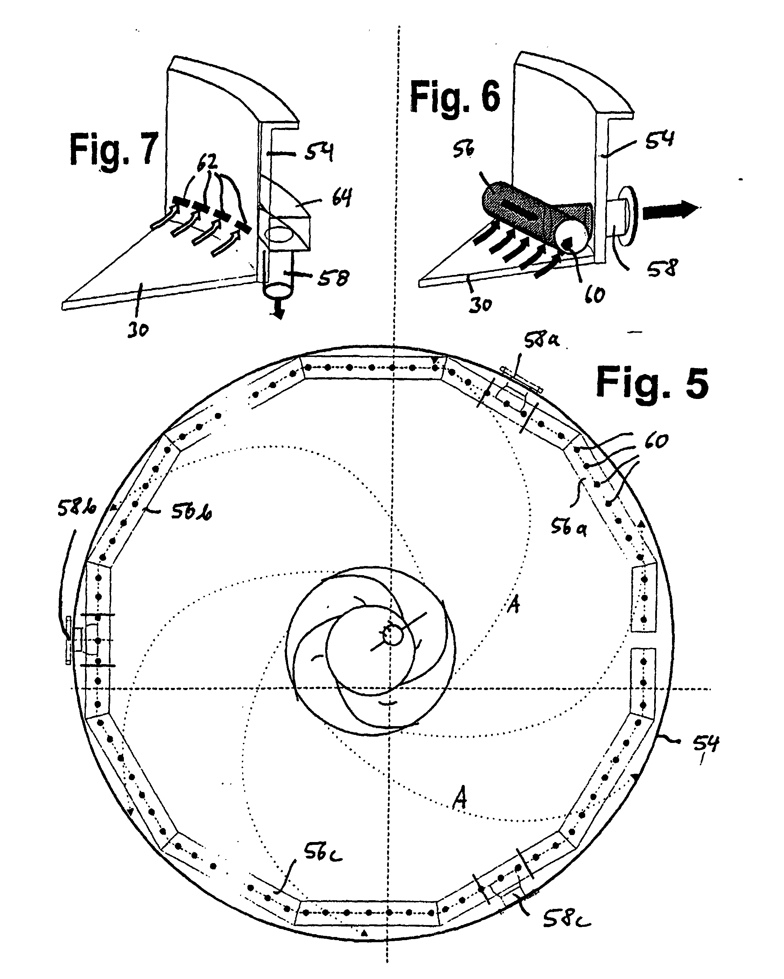

Bei dieser Ausführungsform wird der Suspension vorzugsweise vor der Einleitung über den Suspensionseinlaß **24** eine gasübersättigte Flüssigkeit zugeführt, so daß sich Mikrobläschen dem Gemisch ausgebildet haben, an den abzutrennenden Feststoffteilchen anhaften und deren Aufschwimmen an der Flüssigkeitsoberfläche im Trennbecken **12** bewirken. Gleichzeitig können Schwerstoffen auf den Beckenboden **30** herabsinken, wo sie durch nicht gezeigte Abräumeinrichtungen (Sedimenträumer) entfernt werden oder in geeignete Auffangrinnen gelangen. Die geklärte Flüssigkeit wird anschließend im Bereich der Außenwandung des Trennbeckens **12** abgeleitet, was nachfolgend unter Bezugnahme auf die Figuren 5-7 näher dargestellt wird.

Die in den Figuren 3 und 4 dargestellte alternative Ausführungsform funktioniert sehr ähnlich wie oben beschrieben, nur wird separat von der Suspension über die Flüssigkeitsleitung **40** eine gas-versetzte (vorzugsweise gesättigte) Flüssigkeit wie Wasser eingeleitet, die beim Passieren des Druckentspannungseinlasses **32** entspannt wird, so daß sich Mikrobläschen **52** ausbilden. Unter zunehmender Vermischung treten die vom oberen Bereich des Reaktionsbehälters **20** kommende, bereits in Umfangsdrehrichtung versetzte Suspensionsströmung und die Bläschenströmung durch die Verteilerzellen **44** nach außen.

Durch die erfindungsgemäße Ausbildung wird dem im wesentlichen radial nach außen strömenden Gemisch aus Suspension und Bläschen eine Geschwindigkeitskomponente in Umfangs- oder Tangentialrichtung vermittelt, wodurch sich der bei der Durchströmung des Trennbeckens **12** zurückgelegte Weg gegenüber einer herkömmlichen rein radialen Strömung beträchtlich verlängert und ein verbesserter Abscheidungsgrad erzielbar ist, der bei herkömmlichen Vorrichtungen nur durch größere Trennbecken oder einen geringeren Durchsatz erreicht werden könnte. Die erfindungsgemäße Ausbildung ermöglicht also auch eine kompaktere Bauweise der Feststoffabtenn-Vorrichtung.

Wie in den Figuren 5 bis 7 dargestellt, wird die geklärte Flüssigkeit im Bereich der Außenwand **54** des Trennbeckens **12** aus diesem entfernt. In den Figuren 5 und 6 ist dabei eine bevorzugte Ausführungsform dieses Erfindungsgedanken dargestellt, bei dem die geklärte Flüssigkeit über drei Ableitungsrohre **56a, 56b** und **56c** austritt. Diese Ableitungsrohre **56** besehen aus einzelnen geraden Rohrabschnitten und erstrecken sich jeweils über etwa einem Drittel des gesamten Umfangs der Beckenwand **54**. Natürlich können auch mehr oder weniger Rohre vorgesehen werden, sofern eine Ableitung der Flüssigkeit entlang des gesamten Umfangs erreicht wird. Jedes der Ableitungsrohre **56** ist mit einem Klarwasserauslaß **58** verbunden. Wie in Figur 6 zu erkennen ist, weisen die Ableitungsrohre **56** in ihrem Bodenbereich eine Vielzahl kleiner Durchlässe **60** auf, über die geklärte Flüssigkeit in die Ableitungsrohre **56** eintreten kann. Durch die Anordnung der Durchlässe **60** im Bodenbereich der Ableitungsrohre wird verhindert, daß diese durch möglicherweise von oben herabfallende Feststoffe oder Teilchen blockiert werden.

Eine alternative Ausbildung der Ableitungseinrichtung für die geklärte Flüssigkeit ist in Figur 7 dargestellt, bei der in der Beckenwand **54** in der Nähe des Bodens **30** am gesamten Umfang Durchlaßschlitze und/oder Bohrungen **62** vorgesehen sind die in eine Sammelleitung **64** münden, von wo die geklärte Flüssigkeit einem oder mehreren Klarwasserauslässen **58** zugeführt wird.

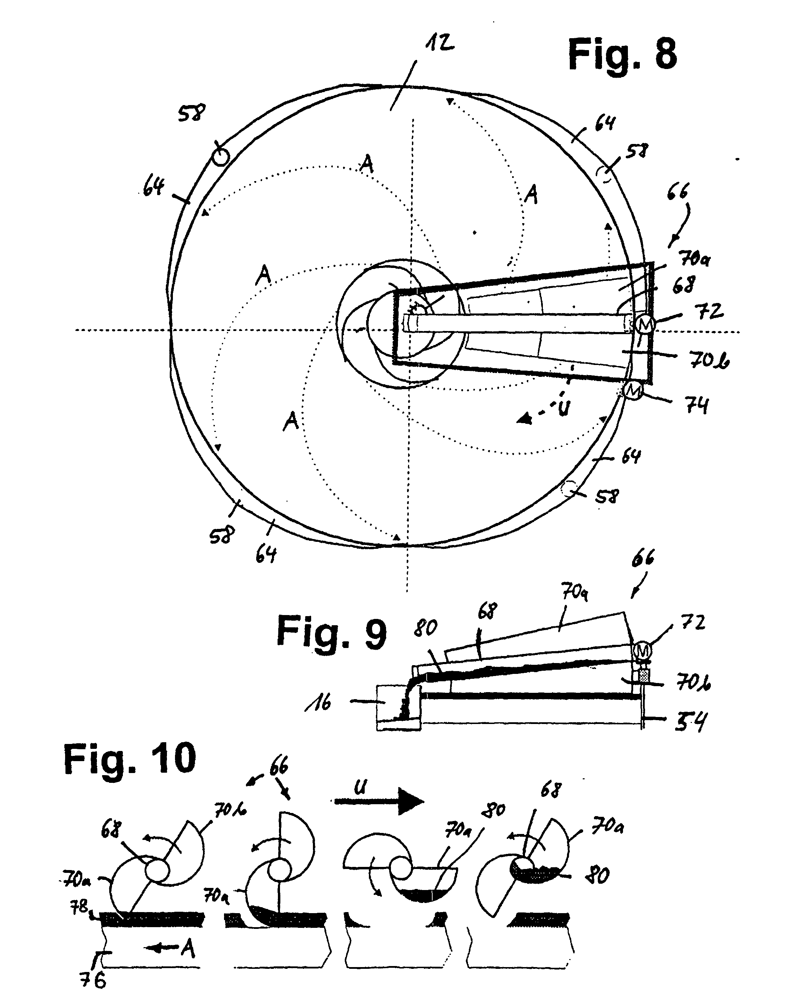

In den Figuren 8 bis 10 ist eine erste Ausführungsform einer oberhalb des Trennbeckens **12** um die vertikale Mittelachse des Trennbeckens **12** rotierende Schlamm-Räumvorrichtung **66a** dargestellt. Die Haltestruktur für die Schlamm-Räumvorrichtung **66a** ist aus Gründen der Übersichtlichkeit nicht dargestellt. Diese Schlamm-Räumvorrichtung **66a** besteht im wesentlichen aus einer bezüglich der Mittelachse des Trennbeckens **12** radial verlaufenden Drehachse **68**, an der mindestens zwei Schlammpaddel **70a**, **70b** befestigt sind. Die Drehachse **68** mit den beiden Paddel **70** wird über einen Drehantrieb **72** um die Drehachse **68** gedreht und gleichzeitig wird die gesamte Schlamm-Räumvorrichtung **66a** mittels eines Umlaufantriebs **74** in der durch den Pfeil U angedeuteten Richtung, d.h. im Uhrzeigersinn, um die Mittelachse des Trennbeckens **12** bewegt. Diese Umlaufrichtung U ist erfindungsgemäß entgegengesetzt zu der durch die Pfeile A angedeuteten Umlaufbewegung des Suspensions-Bläschen-Gemisches.

Wie in Figur 10 anhand von vier verschiedenen Positionen der Schlamm-Räumvorrichtung **66a** dargestellt ist, schöpfen die Schlammpaddel **70a** und **70b** den sich auf der Oberfläche der Flüssigkeit **76** gebildeten Schlamm **78** ab, fördern den abgeschöpften Schlamm 80 bei der weiteren Drehbewegung in Richtung der Drehachse **68,** die gegenüber der Horizontalen zur Mittelachse des Trennbeckens **12** hin geneigt ist (wie in Figur 9 gezeigt). Der abgeschöpfte Schlamm **80** fällt auf die in den Figuren 1 und 3 dargestellte Flotatsammelwanne **16** und wird über die Flotat-Abführleitung **18** abgeleitet.

Von besonderer Bedeutung für eine besonders wirksame Abschöpfung des Schlammes **78,** insbesondere wenn dieser Faserpartikel enthält, ist der Umstand, daß die Drehbewegung U der Schlamm-Räumvorrichtung **66a** entgegengesetzt der in den Figuren 8 und 10 dargestellten Bewegung des Suspensions-Bläschen-Gemisches A ist, um die Relativgeschwindigkeit zwischen dem abzuschöpfenden Schlamm **78** und den Schlammpaddeln **70** zu erhöhen.

Gleichzeitig wird über die Flüssigkeitsleitung **40** und den Drukkentspannungseinlaß **32** eine unter erhöhtem Druck stehende und dabei mit Gas versetzte Flüssigkeit in den Mischraum unterhalb des Umfangsrandes **22** eingeleitet. In dem durch den Einstellkolben **34** gebildeten Spalt im Druckentspannungseinlaß **32** wird in der zugeführten Flüssigkeit ein plötzlicher Druckabfall bewirkt, wodurch das in der Flüssigkeit gelöste Gas (soweit es über das Sättigungsvermögen bei dem am Beckenboden herrschenden Druck übersteigt) als Mikrobläschen **52** von vorzugsweise etwa 10µm bis 1500 µm austritt. Mittels des Handrads **38** kann dabei der Einstellkolben **34** nach Bedarf axial verstellt werden, um abhängig von dem gewünschten Durchsatz der über die Flüssigkeitsleitung **40** zugeführten Flüssigkeit im Zusammenwirken mit dem erhöhten Druck in der Flüssigkeitsleitung **40** eine gewünschte Bläschenbildung zu erhalten. Die mit Mikrobläschen versetzte Flüssigkeit vermischt sich dabei mit der aus dem oberen Bereich des Flokkungsreaktors **20** hinzutretenden Suspension, wobei eben dieses Gemisch durch den Strömungskanal **44** hindurchtritt, wie durch die Pfeile K angedeutet ist..

Um eine möglichst gleichmäßig sich verzögernde Strömung zu erzielen und auch beim Übergang vom Strömungskanal **44** in den Hauptbereich des Trennbeckens **12** möglichst geringe Unstetigkeiten und Verwirbelungen zu erzeugen, nimmt die Höhe des Strömungskanals **44** nach radial außen hin stetig, vorzugsweise linear, zu.

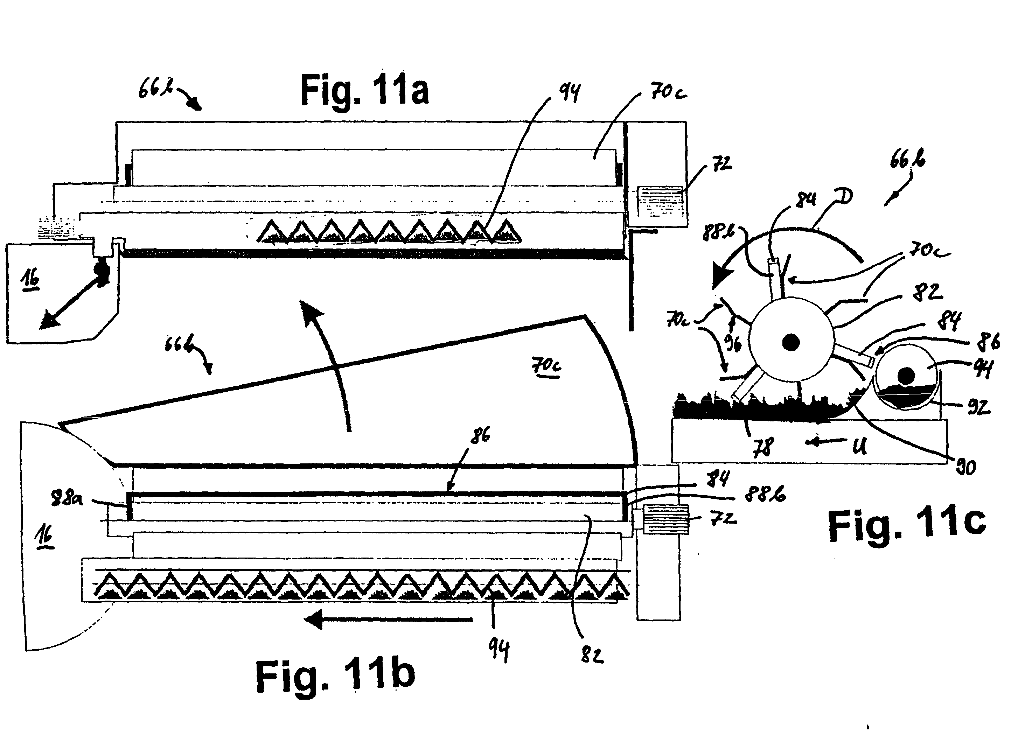

In den Figuren **11a**, **11b** und **11c** sind drei Ausführung einer zweiten Ausführungsform einer Schlamm-Räumvorrichtung **66b** dargestellt. Diese ebenfalls in gleicher Weise wie die in Figur 8 oberhalb des Trennbeckens **12** umlaufende Schlamm-Räumvorrichtung **66b** weist eine vorzugsweise horizontale Drehachse **82** auf, die mittels eines Drehantriebes **72** angetrieben wird. Diese Schlamm-Räumvorrichtung **66b** umfaßt mehrere am Umfang der Drehachse **82** verteilte Schlammpaddel **70c** sowie eine Anzahl ebenfalls am Umfang verteilter Bügelmesser **84**, die einen parallel zur Drehachse **82** verlaufenden Schneidenbereich **86** sowie beidendig Haltestreben **88a, 88b** zum Halten des Schneidenbereichs **86** aufweisen. In der gezeigten Ausführungsform sind 6 Schlammpaddel **70c** und 3 Bügelmesser **84** vorgesehen. Eine Rampe **90** und Ableitrinne **92** sind derart angeordnet, daß die Schlammpaddel **70c** den abzuleitenden Schlamm in die Ableitrinne **92** fördern können, von wo dieser mittels einer Förderschnecke **94** nach radial innen in die Flotatsammelwanne **16** gefördert wird. Bei dieser Ausführungsform rotiert die Drehachse **82** in der mit dem Pfeil D bezeichneten Richtung, wobei die Bügelmesser **84** in den Schlamm **78** eintauchen und Teile davon abtrennen, die von dem nachfolgenden Schlammpaddel **70c** erfaßt und auf die Rampe **90** transportiert werden kann, nach deren Passieren der abgetrennte Schlamm in die Ableitrinne **92** fällt. Dabei weisen die Schlammpaddel **70c** vorzugsweise einen entgegengesetzt zur Drehrichtung D orientierten Knick **96** auf, um den Schlamm von der Rampe **90** vollständig in die Ableitrinne **92** zu befördern. Bei diesem Abschöpfvorgang dreht sich die Schlamm-Räumvorrichtung **66b** in der in Figur 11c mit dem Pfeil U bezeichneten Drehrichtung.

## Patentansprüche

1. Vorrichtung zur chemisch-physikalischen Feststoffabtrennung insbesondere mit dem Verfahren der Gasblasen-Flotation aus einer Suspension mit einem im wesentlichen zylindrischen Trennbecken (12), in dem zentrisch ein rotationssymmetrischer Flockungs-/Strömungsreaktor (20) vorgesehen ist, in den exzentrisch mindestens ein Suspensionseinlaß (24) einmündet, welcher die zulaufende Suspension in den Flockungsreaktor (20) einleitet und dabei eine Zirkularströmung erzeugt, **dadurch gekennzeichnet, daß** der Suspensionseinlaß (24) im oberen Bereich des Flockungsreaktors (20) vorgesehen ist und die Zirkularströmung aus dem Flockungsreaktor (20) nach unten tangential-radial über den äußeren Umfang in kreisförmig angeordnete Verteilerzellen (44) abfließt, welche die Tangentialkomponente der Suspensionsströmung zum Austritt in das Trennbecken (12) hin verstärken.

2. Vorrichtung nach Anspruch 1, **dadurch gekennzeichnet, daß** der Flockungsreaktor (20) glockenartig, zylindrisch oder kegelstumpfartig ausgebildet ist, und der Suspensionseinlaß (24) oberhalb der Austrittsöffnungen angeordnet ist.

3. Vorrichtung nach Anspruch 1, **dadurch gekennzeichnet, daß** im Bodenbereich des Flockungsreaktors (20) ein Druckentspannungseinlaß (32) mit einem ringförmigen Spalt angeordnet ist, über dem der Entspanungsdruck abgebaut wird.

4. Vorrichtung nach Anspruch 3, **dadurch gekennzeichnet, daß** oberhalb des Druckentspannungseinlasses (32) eine vorzugsweise tellerförmige Ablenkplatte vorgesehen ist.

5. Vorrichtung nach Anspruch 3, **dadurch gekennzeichnet, daß** der ringförmige Spalt einstellbar ist, vorzugsweise mittels eines axial verschiebbaren Einstellkolbens (34), an dem vorzugsweise ein die austretende Blasenströmung in horizontaler Richtung ablenkender Ablenkrand (35) angeformt ist.

6. Vorrichtung nach Anspruch 1, **dadurch gekennzeichnet, daß** die Verteilerzellen (44) Strömungskanäle mit nach radial außen zunehmendem Querschnitt aufweisen.

7. Vorrichtung nach Anspruch 6, **dadurch gekennzeichnet, daß** die Seitenwände der Verteilerzellen(44), von oben gesehen, eine zykloidische Krümmung aufweisen und am Auslaß eine größere Tangentialkomponente als am Einlaß aufweisen.

8. Vorrichtung nach Anspruch 6 oder 7, **dadurch gekennzeichnet, daß** das Komponentenverhältnis der Tangentialkomponente zur Radialkomponente der Suspensions-Strömungsgeschwindigkeit am Verteilerzelleneinlaß zwischen 0,3:1 und 1:1, vorzugsweise 0,8:1 bis 1:1 beträgt.

9. Vorrichtung nach Anspruch 6 oder 7, **dadurch gekennzeichnet, daß** das Komponentenverhältnis der Tangentialkomponente zur Radialkomponente der Suspensions-Strömungsgeschwindigkeit am Verteilerzellenauslaß zwischen 1:1 und 50:1, vorzugsweise 2:1 bis 5:1 beträgt.

10. Vorrichtung nach einem der Ansprüche 6 bis 9, **dadurch gekennzeichnet, daß** die Höhe der Verteilerzellen (44) nach radial außen hin stetig zunimmt.

11. Vorrichtung nach Anspruch 1, **dadurch gekennzeichnet, daß** der exzentrische Suspensionseinlaß (24) Einrichtungen zur Erzielung einer tangentialen Ausströmung der Suspension in den Reaktorinnenraum umfaßt.

12. Vorrichtung nach Anspruch 11, **dadurch gekennzeichnet, daß** der Suspensionseinlaß (24) eine schräg verlaufende Endkante und/oder im Endbereich eine Biegung und/oder Umlenkflügel zur Tangentialrichtung hin aufweist.

13. Vorrichtung nach Anspruch 1, **dadurch gekennzeichnet, daß** in der Außenwand des Trennbeckens (12) eine Vielzahl beabstandeter Auslaßöffnungen (62) vorgesehen sind, die über Sammelleitungen (64) mit mindestens einem Auslaß (58) kommunizieren.

14. Vorrichtung nach Anspruch 1, **dadurch gekennzeichnet, daß** innenseitig an der Außenwand des Trennbeckens (12) mindestens ein umlaufendes Ableitungsrohr (56) mit einer Vielzahl beabstandeter Durchlaßöffnungen (60) befestigt ist, wobei das Ableitungsrohr (56) über eine Verbindungsleitung mit einem Auslaß (58) kommuniziert.

15. Vorrichtung nach Anspruch 14, **dadurch gekennzeichnet, daß** am Umfang verteilt zwischen 2 und 8, vorzugsweise 3 bis **4** Ableitungsrohrabschnitte (56a, b, c) nebeneinander vorgesehen sind, die jeweils über mindestens eine Verbindungsleitung mit je einem eigenen Auslaß (58) kommunizieren.

16. Vorrichtung nach Anspruch 1, **dadurch gekennzeichnet, daß** diese mindestens eine oberhalb des Trennbeckens (12) rotierende Schlamm-Räumvorrichtung (66a, b) umfaßt.

17. Vorrichtung nach Anspruch 16, **dadurch gekennzeichnet, daß** die Schlamm-Räumvorrichtung (66b) zwei Schlammpaddel (70a, 70b) umfaßt, deren Bewegungsrichtung im eingetauchten Moment entgegengesetzt zur tangentialen Komponente der Suspensionsströmung ist.

## Claims

1. An apparatus for chemophysically separating solids in suspension more particularly by the method of dissolved air flotation in a substantially cylindrical DAF tank (12) centrally provided with a rotationally symmetrical flocculation/flow reactor (20) into which at least one suspension inlet (24) ports eccentrically for introducing the infeed suspension into the flocculation reactor (20) in thereby generating a circulatory flow, **characterized in that** the suspension inlet (24) provided in the upper region of the flocculation reactor (20) and the circulatory flow is discharged from the flocculation reactor (20) downwards at a tangent radially over the outer circumference into a circular arrangement of distribution cells (44) which intensify the tangential component of the suspension flow in emerging into the DAF tank (12).

2. The apparatus as set forth in claim 1, **characterized in that** the flocculation reactor (20) is configured bell-shaped, cylindrical or in the form of a truncated cone, and the suspension inlet (24) is arranged above the outlet orifices.

3. The apparatus as set forth in claim 1, **characterized in that** in the bottom region of the flocculation reactor (20) a pressure relief inlet (32) is arranged with an annular gap via which the relief pressure is reduced.

4. The apparatus as set forth in claim 3, **characterized in that** a preferably plate-shaped baffle is provided above the pressure relief inlet (32).

5. The apparatus as set forth in claim 3, **characterized in that** the annular gap is adjustable, preferably by means of an axially shiftable spool (34) at which preferably a vane edge (35) horizontal deflecting the emerging sparged flow is molded.

6. The apparatus as set forth in claim 1, **characterized in that** the distribution cells (44) comprise flow channels with a cross-section flared radial outwards.

7. The apparatus as set forth in claim 6, **characterized in that** the sidewalls of the distribution cells (44) feature as viewed from above, a cycloidal curvature and a larger tangential component at the outlet than at the inlet.

8. The apparatus as set forth in claim 6 or 7, **characterized in that** the ratio of the tangential component to the radial component of the suspension flow velocity at the inlet to the distribution cells is in the range 0.3: 1 to 1:1, preferably 0.8:1 to 1:1.

9. The apparatus as set forth in claim 6 or 7, **characterized in that** the ratio of the tangential component to the radial component of the suspension flow velocity at the outlet of the distribution cells is in the range 1.1: 1 to 50:1, preferably 2:1 to 5:1.

10. The apparatus as set forth in any of the claims 6 to 9, **characterized in that** the height of the distribution cells (44) continually increases radial outwards.

11. The apparatus as set forth in claim 1, **characterized in that** the eccentric suspension inlet (24) comprises means for achieving a tangential outflow of the suspension into the inner space of the reactor.

12. The apparatus as set forth in claim 11, **characterized in that** the suspension inlet (24) comprises a slanting end edge and/or a bend and/or deflector vane in the tangential direction in the end portion.

13. The apparatus as set forth in claim 1, **characterized in that** in the outer wall of the DAF tank (12) perforations (62) are provided which fluidly communicate via collecting conduits (64) with at least one outlet (58).

14. The apparatus as set forth in claim 1, **characterized in that** secured to the inner side of the outer wall of the DAF tank (12) is at least one circumferential drain conduit (56) including perforations (60), said drain conduit (56) fluidly communicating with an outlet (58) via a connecting conduit.

15. The apparatus as set forth in claim 14, **characterized in that** provided distributed about the circumference are two to eight, preferably three to four drain conduit sections (56a,b,c) juxtaposed, each of which fluidly communicates via at least one connecting conduit to a separate outlet (58).

16. The apparatus as set forth in claim 1, **characterized in that** it comprises at least one scum skimmer (66a,b) rotating above the DAF tank (12).

17. The apparatus as set forth in claim 16, **characterized in that** the scum skimmer (66a,b) comprises two paddles (70a, 70b) whose direction of movement when immersed is opposite to the tangential component of the suspension flow.

## Revendications

1. Dispositif pour la séparation chimique-physique de solides, en particulier dans le procédé de flottation d'une suspension par bulles de gaz, lequel dispositif présente un bassin de séparation (12) essentiellement cylindrique au centre duquel est prévu un réacteur (20) de floculation/écoulement à symétrie de rotation, dans lequel au moins une entrée de suspension (24) qui introduit la suspension entrante dans le réacteur de floculation (20) et crée ainsi un écoulement circulaire débouche en position décentrée, **caractérisé en ce que** l'entrée de suspension (24) est prévue dans la zone supérieure du réacteur de floculation (20) et **en ce que** l'écoulement circulaire sort du réacteur de floculation (20) tangentiellement-radialement vers le bas par la périphérie extérieure, dans des cellules de répartition (44) disposées en cercle qui renforcent la composante tangentielle de l'écoulement de suspension en direction de sa sortie dans le bassin de séparation (12).

2. Dispositif selon la revendication 1, **caractérisé en ce que** le réacteur de floculation (20) est configuré en forme de cloche, de cylindre ou de tronc de cône, l'entrée de suspension (24) étant disposée au-dessus des ouvertures de sortie.

3. Dispositif selon la revendication 1, **caractérisé en ce qu'**une entrée (32) de délestage de pression présentant un interstice de forme annulaire par lequel la pression de détente est délestée est disposée dans la zone du fond du réacteur de floculation (20).

4. Dispositif selon la revendication 3, **caractérisé en ce qu'**une plaque de déviation, de préférence en forme de plateau, est prévue au-dessus de l'entrée (32) de détente de pression.

5. Dispositif selon la revendication 3, **caractérisé en ce que** l'interstice de forme annulaire peut être ajusté, de préférence au moyen d'un piston d'ajustement (34) apte à être déplacé axialement et sur lequel est de préférence formé un bord de déviation (35) qui dévie dans la direction horizontale l'écoulement de bulles sortant.

6. Dispositif selon la revendication 1, **caractérisé en ce que** les cellules de répartition (44) présentent des canaux d'écoulement présentant une section transversale qui augmente radialement vers l'extérieur.

7. Dispositif selon la revendication 6, **caractérisé en ce que** vues du haut, les parois latérales des cellules de répartition (44) présentent une courbure en cycloïde et présentent une composante tangentielle plus élevée à la sortie qu'à l'entrée.

8. Dispositif selon la revendication 6 ou 7, **caractérisé en ce que** la rapport entre la composante tangentielle et la composante radiale de la vitesse de l'écoulement de suspension à l'entrée des cellules de répartition est compris entre 0,3:1 et 1:1, et de préférence entre 0,8:1 et 1:1.

9. Dispositif selon la revendication 6 ou 7, **caractérisé en ce que** le rapport entre la composante tangentielle et la composante radiale de la vitesse de l'écoulement de suspension à la sortie des cellules de répartition est compris entre 1:1 et 50:1, et de préférence entre 2:1 et 5:1.

10. Dispositif selon l'une des revendications 6 à 9, **caractérisé en ce que** la hauteur des cellules de répartition (44) augmente de manière constante dans le sens allant radialement vers l'extérieur.

11. Dispositif selon la revendication 1, **caractérisé en ce que** l'entrée décentrée de suspension (24) comprend des dispositifs pour la création d'un écoulement tangentiel de sortie de la suspension dans l'espace intérieur du réacteur.

12. Dispositif selon la revendication 11, **caractérisé en ce que** l'entrée de suspension (24) présente un bord final qui s'étend obliquement et/ou un coude dans la zone d'extrémité et/ou des ailes de déviation orientées vers la direction tangentielle.

13. Dispositif selon la revendication 1, **caractérisé en ce qu'**une pluralité d'ouvertures de sortie (62) situées à distance les unes des autres est prévue sur la paroi extérieure du bassin de séparation (12) et communique par des conduits de collecte (64) avec au moins une sortie (58).

14. Dispositif selon la revendication 1, **caractérisé en ce que** du côté intérieur, au moins un tube périphérique d'évacuation (56) doté d'une pluralité d'ouvertures de passage (60) situées à distance les unes des autres est fixé sur la paroi extérieure du bassin de séparation (12), le tube d'évacuation (56) communiquant avec la sortie (58) par un conduit de liaison.

15. Dispositif selon la revendication 14, **caractérisé en ce qu'**entre 2, et de préférence entre 3 et 4 parties de conduit d'évacuation (56a, b, c) sont réparties les unes à côté des autres à la périphérie et communiquent chacune par au moins un conduit de liaison avec une sortie (58) propre respective.

16. Dispositif selon la revendication 1, **caractérisé en ce qu'**il comprend au moins un dispositif rotatif d'enlèvement des boues (66a, b) situé au-dessus du bassin de séparation (12).

17. Dispositif selon la revendication 16, **caractérisé en ce que** le dispositif (66b) d'enlèvement des boues comporte au moins deux pales à boues (70a, 70b) dont la direction de déplacement est opposée à la composante tangentielle de l'écoulement de suspension lorsqu'elles sont immergées.
